# EUROPÄISCHE PATENTANMELDUNG

(11) **EP 4 507 154 A1**
(43) Veröffentlichungstag der Anmeldung: **12.02.2025**
(21) Anmeldenummer: 23190255.2
(22) Anmeldetag: 08.08.2023
(51) Int. Cl.: H02J 7/00

(54) **ADAPTIVE REGELUNG FÜR BATTERIEN**

(71) Anmelder: Hilti Aktiengesellschaft, 9494 Schaan (LI)
(72) Erfinder: Hartmann, Markus, 87665 Mauerstetten (DE); Hauser, Klaus, 86830 Schwabmünchen (DE); Braun, Philipp, 77654 Offenburg (DE); Stanger, Robert, 87600 Kaufbeuren (DE); Frenzel, Mathias, 86944 Unterdießen (DE); Britz, Rory, 82319 Starnberg (DE); Ender, Moses, 86916 Kaufering (DE); Seltmann, Daniel, 86899 Landsberg am Lech (DE)
(74) Vertreter: Hilti Aktiengesellschaft Corporate Intellectual Property

(57) **Zusammenfassung**

Verfahren zum Steuern und Regeln eines Systems mit wenigstens einem Akkumulator und einer Ladevorrichtung, wobei der wenigstens eine Akkumulator einen Transceiver, wenigstens einen Sensor sowie eine Speichereinheit und die Ladevorrichtung einen Transceiver sowie eine Speichereinheit enthält, wobei in der Speichereinheit des Akkumulators wenigstens ein erste Regelparameter gespeichert ist.

Des Weiteren betrifft die Erfindung ein System zur Durchführung des Verfahrens enthaltend wenigstens eine erste Systemkomponente, eine zweite Systemkomponente sowie eine dritte Systemkomponente, wobei die erste Systemkomponente in Form eines Akkumulators mit einem Transceiver und einer Speichereinheit, die zweite Systemkomponente in Form einer Datenspeicher- und Rechenvorrichtung mit einem Transceiver und die dritte Systemkomponente in Form einer Werkzeugmaschine mit einem Transceiver und einer Speichereinheit oder Ladevorrichtung mit einem dritten Transceiver und einer Speichereinheit ausgestaltet ist.

## Beschreibung

### Adaptive Regelung für Batterien

Die vorliegende Erfindung betrifft ein Verfahren zum Steuern und Regeln eines Systems mit wenigstens einem Akkumulator und einer Ladevorrichtung, wobei der wenigstens eine Akkumulator einen Transceiver, wenigstens einen Sensor sowie eine Speichereinheit und die Ladevorrichtung einen Transceiver sowie eine Speichereinheit enthält, wobei in der Speichereinheit des Akkumulators wenigstens ein erste Regelparameter gespeichert ist.

Des Weiteren betrifft die Erfindung ein System zur Durchführung des Verfahrens enthaltend wenigstens eine erste Systemkomponente, eine zweite Systemkomponente sowie eine dritte Systemkomponente, wobei die erste Systemkomponente in Form eines Akkumulators mit einem Transceiver und einer Speichereinheit, die zweite Systemkomponente in Form einer Datenspeicher- und Rechenvorrichtung mit einem Transceiver und die dritte Systemkomponente in Form einer Werkzeugmaschine mit einem Transceiver und einer Speichereinheit oder Ladevorrichtung mit einem dritten Transceiver und einer Speichereinheit ausgestaltet ist.

Die Verwendung von Akkumulatoren zur Versorgung von Werkzeugmaschinen mit elektrischer Energie ist durch den Stand der Technik weitestgehend bekannt.

Diese Akkumulator enthalten für gewöhnlich eine Anzahl an Energiespeicherzellen (auch Akkuzellen genannt), die zum Aufnehmen, Speichern sowie Abgeben von elektrischer Energie dienen und ausgestaltet sind. Das Aufnehmen von elektrischer Energie in die Energiespeicherzellen kann auch als Laden (bzw. Aufladen) bezeichnet werden. Das Abgeben von elektrischer Energie aus den Energiespeicherzellen kann auch als Entladen bezeichnet werden.

Zum Aufladen bzw. Laden mit elektrischer Energie wird der Akkumulator für gewöhnlich mit einer Ladeeinrichtung (auch Lader oder Charger genannt) verbunden. Die Ladeeinrichtung leitet elektrische Energie gemäß einer vorbestimmten Ladeeinstellung (auch Lademodus genannt) mit festgelegten Parametern für den eigentlichen Ladevorgang an die einzelnen Energiespeicherzellen der Akkumulators.

In Speichereinheiten innerhalb eines Akkumulators sind spezielle Lade- und Entladeparametersätze hinterlegt, mit denen das tatsächliche Versorgen einer Werkzeugmaschine mit elektrischer Energie, d.h. das Entladen des Akkumulators, sowie das Aufladen des Akkumulators genau vorbestimmten Abläufen entspricht. Die Lade- und Entladeparametersätze können dabei auch als Regelparametersätze bezeichnet werden.

Durch Fertigungstoleranzen, Verschleiß, Alterung und Fehlanwendungen (d.h. in Form von Missbrauch, Stürze oder dergleichen) kann es bei den Akkumulatoren dazu führen, dass die vorgegebenen Lade- und Entladeparametersätze nicht mehr zu einer optimalen Leistungsentfaltung beim Laden und/oder Entladen des Akkumulators geeignet sind.

Aufgabe der vorliegenden Erfindung ist das vorstehend beschriebene Problem zu lösen.

Die Aufgabe wird ebenfalls gelöst durch den Gegenstand des Anspruchs 1 sowie durch den Gegenstand des Anspruchs 4.

Weitere vorteilhafte Ausführungen der Erfindung sind in den entsprechenden Unteransprüchen beschrieben.

Die Aufgabe wird insbesondere gelöst durch ein Verfahren zum Steuern und Regeln eines Systems mit wenigstens einem Akkumulator und einer Ladevorrichtung, wobei der wenigstens eine Akkumulator einen Transceiver, wenigstens einen Sensor sowie eine Speichereinheit und die Ladevorrichtung einen Transceiver sowie eine Speichereinheit enthält, wobei in der Speichereinheit des Akkumulators wenigstens ein erste Regelparameter gespeichert ist.

Erfindungsgemäß sind die folgenden Verfahrensschritte vorgesehen
- Erfassen wenigstens eines Betriebskennwertes durch den wenigstens einen Sensor des Akkumulators;
- Verbinden des wenigstens einen Akkumulators mit der Ladevorrichtung;
- Aussenden des wenigstens einen Betriebskennwertes des Akkumulators von dem Akkumulator an die Ladevorrichtung vor Beginn eines Ladevorgangs;
- Senden des wenigstens einen Betriebskennwertes von der Ladevorrichtung an eine Datenspeicher- und Rechenvorrichtung;
- Vergleichen des wenigstens einen Betriebskennwertes mit einem in der Datenspeicher- und Rechenvorrichtung gespeicherten Schwellwert;
- Senden wenigstens eines zweiten Regelparameters von der Datenspeicher- und Rechenvorrichtung über die Ladevorrichtung zu dem wenigstens einen Akkumulator zum Ersetzen des entsprechenden ersten Regelparameters, wenn der empfangene Betriebskennwert einen in der Datenspeicher- und Rechenvorrichtung gespeicherten Schwellwert übersteigt;
- Laden des wenigstens einen Akkumulators mit elektrischer Energie durch die Ladevorrichtung mit wenigstens dem ersten Regelparameter; oder
- Laden des wenigstens einen Akkumulators mit elektrischer Energie durch die Ladevorrichtung mit wenigstens dem ersten Regelparameter.

Mit der Formulierung "Beginn eines Ladevorgangs" bedeutet, dass elektrische Energie von einer Ladevorrichtung zu Akkumulator gelangt. "Regelparameter eines Akkumulators" kann auch als "Ist-Daten eines Akkumulators" verstanden werden.

Gemäß einer weiteren vorteilhaften Ausführungsform kann es möglich sein, dass der Verfahrensschritt:
- Aussenden wenigstens eines ersten Regelparameters des Akkumulators von dem Akkumulator an die Ladevorrichtung vor Beginn eines Ladevorgangs
enthalten ist.

Entsprechend einer weiteren vorteilhaften Ausführungsform kann es ebenfalls möglich sein, dass der Verfahrensschritt:
- Verbinden des wenigstens ersten oder zweiten Akkumulators mit einer Werkzeugmaschine;
- Versorgen der Werkzeugmaschine mit elektrischer Energie durch ein Entladen des Akkumulators mit wenigstens dem zweiten Regelparameter.
enthalten ist.

Die Aufgabe wird des Weiteren gelöst durch ein System zur Durchführung des Verfahrens enthaltend wenigstens eine erste Systemkomponente, eine zweite Systemkomponente sowie eine dritte Systemkomponente, wobei die erste Systemkomponente in Form eines Akkumulators mit einem ersten Transceiver und einer ersten Speichereinheit, die zweite Systemkomponente in Form einer Datenspeicher- und Rechenvorrichtung mit einem zweiten Transceiver und die dritte Systemkomponente in Form einer Werkzeugmaschine mit einem dritten Transceiver und einer zweiten Speichereinheit oder Ladevorrichtung mit einem dritten Transceiver und einer dritten Speichereinheit ausgestaltet ist.

Weitere Vorteile ergeben sich aus der folgenden Figurenbeschreibung. In der Figur ist ein besonders bevorzugtes Ausführungsbeispiel der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigt:
- Figur 1: eine Seitenansicht auf eine Werkzeugmaschine mit einem angeschlossenen Akkumulator gemäß einer ersten beispielhaften Ausführungsform;

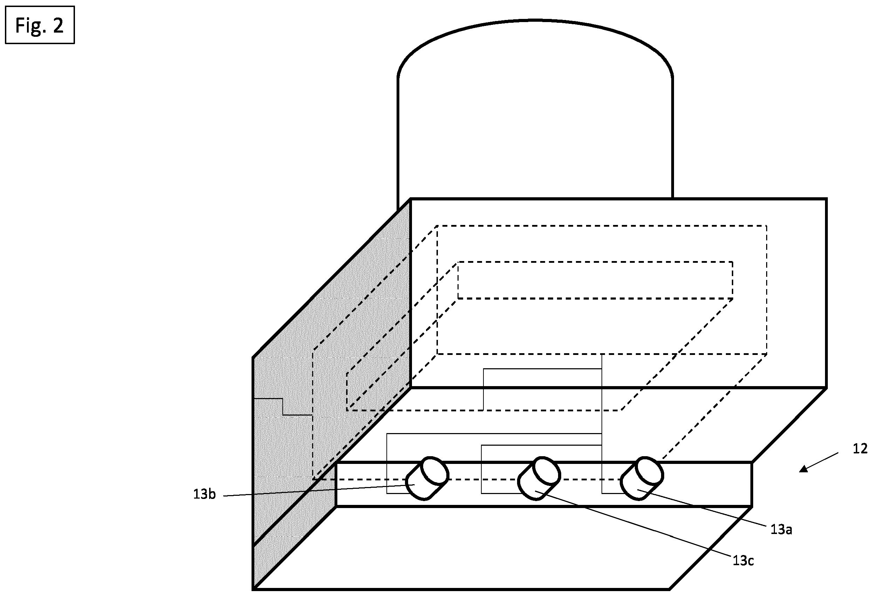

- Figur 2: eine perspektivische Ansicht auf eine Schnittstellenvorrichtung der Werkzeugmaschine;

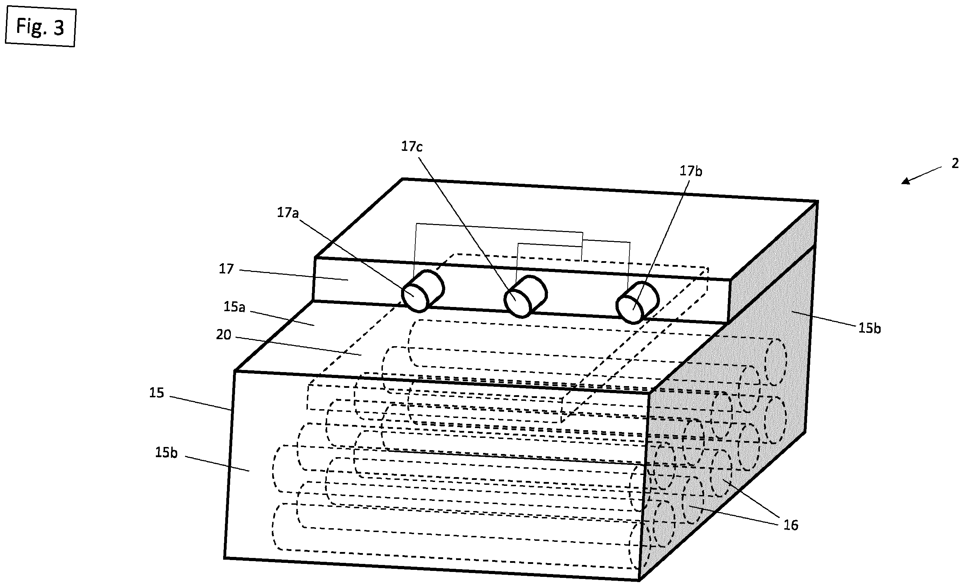

- Figur 3: eine perspektivische Ansicht auf eine Schnittstellenvorrichtung des Akkumulators;
- Figur 4: eine perspektivische Ansicht auf eine Ladevorrichtung; und
- Figur 5: eine schematische Ansicht eines Systems mit einer ersten Werkzeugmaschine verbunden mit einem ersten Akkumulator, einer zweiten Werkzeugmaschine verbunden mit einem zweiten Akkumulator, einer dritten Werkzeugmaschine verbunden mit einem dritten Akkumulator, einer ersten Ladevorrichtung, mit welcher der erste Akkumulator verbunden werden kann, einer zweiten Ladevorrichtung, mit welcher der zweite Akkumulator verbunden werden kann, einer drittem Ladevorrichtung, mit welcher der dritte Akkumulator verbunden werden kann sowie eine Datenspeicher- und Rechenvorrichtung.

### Ausführungsbeispiele:

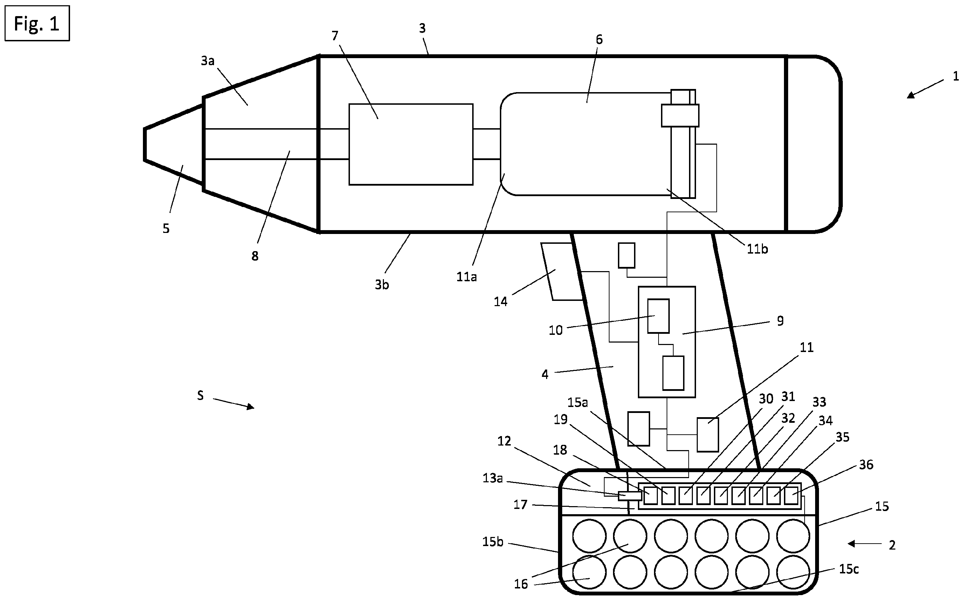

Figur 1 zeigt eine Werkzeugmaschine 1 verbunden mit einem Akkumulator 2. In dem vorliegenden Ausführungsbeispiel ist die Werkzeugmaschine 1 als Akku-Schrauber ausgestaltet.

Die Werkzeugmaschine 1 enthält im Wesentlichen ein Gehäuse 3, einen Handgriff 4 und eine Werkzeugaufnahme 5. Im Inneren des Gehäuses 3 ist ein Antrieb 6 in Form eines Elektromotors, eine Getriebevorrichtung 7, eine Abtriebswelle 8, eine Steuerungseinheit 9, eine Speichereinheit 10 und einen Transceiver 11 positioniert.

Der als Elektromotor ausgestaltete Antrieb 6, die Getriebevorrichtung 7 und die Abtriebswelle 8 sind dabei so zueinander angeordnet, dass ein von dem Elektromotor 6 erzeugtes Drehmoment über die Abtriebswelle 8 und die Getriebevorrichtung 7 auf die Werkzeugaufnahme 5 übertragbar ist. Die Werkzeugaufnahme 5 ist dazu an einem vorderen Ende 3a des Gehäuses 3 positioniert und zum Aufnehmen sowie Halten eines Werkzeug.

Im Ausführungsfall eines Akku-Schraubers kann das Werkzeug als Schrauber-Bit ausgestaltet sein. In den Figuren ist das Werkzeug nicht dargestellt.

An einer Unterseite 3b des Gehäuses 3 ist der Handgriff 4 positioniert. Der Handgriff 4 ist dabei mit einem ersten Ende 4a an der Unterseite 3b des Gehäuses 3 befestigt. An einem zweiten Ende 4b des Handgriffs 4 ist eine Werkzeugmaschinenschnittstelle 12 positioniert und dient zum elektrischen bzw. elektronischen sowie mechanischen Verbinden der Werkzeugmaschine 1 mit dem Akkumulator 2. Zum elektrischen bzw. elektronischen Verbinden weist die Werkzeugmaschine 1 einen Pluskontakt 13a, einen Minuskontakt 13b und einen Kommunikationskontakt 13c auf. Der Plus- und Minuskontakt 13a, 13b dient zur Erzeugen eines Stromkreises, wenn der Akkumulator 2 mit der Werkzeugmaschine 1 verbunden ist. Der Kommunikationskontakt 13c dient zum Senden und Empfangen von Daten sowie Informationen in Form von elektrischen Signalen.

An einem vorderen Ende 4c des Handgriffs 4 ist ein Betätigungsschalter 14 vorgesehen. Der Betätigungsschalter 14 dient zum Aktivieren des Werkzeugmaschine 1. Im Inneren des Handgriffs 4 ist die Steuerungseinheit 9 mit dem Transceiver 11 und der Speichereinheit 10 positioniert. Mit Hilfe der Steuerungseinheit 9 werden die einzelnen Funktionen der Werkzeugmaschine 1 gesteuert und geregelt. Zu den Funktionen gehören beispielsweise das Einstellen einer bestimmten Drehzahl des Elektromotors 6.

Alternativ kann die Werkzeugmaschine 1 auch als Bohrhammer, Bohrmaschine, Säge, Schleifgerät oder dergleichen ausgestaltet sein.

Der Akkumulator 2 kann mit einer Werkzeugmaschine 1 wiederlösbar verbunden werden, um die Werkzeugmaschine 1 mit elektrischer Energie zu versorgen. Der Akkumulator 2 enthält im Wesentlichen ein Akku-Gehäuse 15, eine Anzahl an Energiespeicherzellen 16, eine Akku-Schnittstelle 17, eine Speichereinheit 18, einen Transceiver 19, eine Steuerungseinrichtung 20 sowie eine Vielzahl an Sensoren.

Die Energiespeicherzellen 16 können auch als Akku-Zellen bezeichnet werden und sind im Inneren des Akku-Gehäuses 15 angeordnet.

Das Akku-Gehäuse 15 enthält dabei im Wesentlichen ein Deckelelement 15a, vier Seitenwände 15b und ein Bodenelement 15c.

Die Akku-Schnittstelle 17 ist an der Außenseite des Deckelelements 15a angeordnet und dient zum elektrischen bzw. elektronischen sowie mechanischen Verbinden des Akkumulators 2 mit der Werkzeugmaschine 1 oder einer Ladevorrichtung 22.

Zum elektrischen bzw. elektronischen Verbinden weist die Akku-Schnittstelle 17 einen Pluskontakt 17a, einen Minuskontakt 17b und einen Kommunikationskontakt 17c auf. Der Plus- und Minuskontakt 17a, 17b dient zur Erzeugen eines Stromkreises, wenn der Akkumulator 2 mit einer Werkzeugmaschine 1 oder einer Ladevorrichtung 22 verbunden ist. Der Kommunikationskontakt 17c dient zum Senden und Empfangen von Daten sowie Informationen in Form von elektrischen Signalen.

Alternativ oder zusätzlich kann der Akkumulator auch eine Funkkommunikation (z.B. Bluetooth) bzw. drahtlose Kommunikation enthalten.

Die Energiespeicherzellen 16 dienen zum Aufnehmen, Speichern und erneuten Abgeben elektrischer Energie. Wie in den Figuren angedeutet, sind die Energiespeicherzellen 16 in zylindrischer Form sowie auf Basis einer Lithium-Ionen-Technologie ausgestaltet. Jede Energiespeicherzelle 16 enthält an einem Ende eine Kontakteinrichtung, die zur Übertragung elektrischer Energie dient. Die einzelnen Kontakteinrichtung sind über entsprechende Leitungen mit der Steuerungseinrichtung 20 des Akkumulators 2 verbunden.

Alternativ können die Energiespeicherzellen 16 auch auf einer anderen geeigneten Technologie basieren.

Die zylindrische Form der Energiespeicherzellen 16 ist ebenfalls optional, sodass auch jede andere geeignete Form bzw. Geometrie gewählt werden kann. So ist es insbesondere auch möglich, dass die Energiespeicherzellen 16 als Pouchzellen ausgestaltet sind.

Es ist zudem auch möglich, dass der Akkumulator 2 sowohl zylindrische Energiespeicherzellen 16 als auch Pouch-Zellen enthält. Es ist insbesondere möglich, dass der Akkumulator 2 lediglich eine einzige zylindrische Energiespeicherzelle 16 und eine einzige Pouchzelle enthält.

Die Steuerungseinrichtung 20 regelt und steuert verschiedene Funktionen des Akkumulators 2. Zu den Funktion gehört unter anderen die Steuerung der Aufnahme und Abgabe von elektrischer Energie in bzw. aus den Energiespeicherzellen 16. Darüber hinaus wird mit Hilfe der Steuerungseinrichtung 20 der Menge an elektrischer Energie gesteuert, die von den Energiespeicherzellen 16 aufgenommen oder abgegeben werden sollen.

In der Speichereinheit 18 ist ein erster Regelparametersatz gespeichert, welcher eine Vielzahl an Regelparameter enthält. Die Regelparameter können auch als Regelkenngrößen oder Einstellparameter bezeichnet werden.

Die Speichereinheit 18 ist so mit der Steuerungseinrichtung 20 verbunden, dass die Steuerungseinrichtung 20 auf die einzelnen in der Speichereinheit 18 gespeicherten Regelparameter zugreifen kann und anhand dieser Regelparameter die Funktionen des Akkumulators 2 gesteuert bzw. geregelt werden können. Zu den Regelparametern gehören maximale Entladeströme (Stromstärkewert), maximale Ladeströme (Stromstärkewert), minimale und maximale Ladezeiten, minimale und maximale Innenwiderstände sowie minimale und maximale Kapazitätswerte (in Ah)

Zu den Regelparametern gehören darüber hinaus auch Verfahren zur Reduzierung oder vollständigen Blockade der Energieaufnahme oder -abgabe durch die Energiespeicherzellen 16 im Falle eines maximalen Beschleunigungswerts bzw. Bremswerts, einer vorbestimmten Anzahl an Bremswerten innerhalb von vorbestimmten Schwellwerten sowie minimalen und maximalen Temperaturwerten.

Der Akkumulator 2 enthält des Weiteren jeweils einen Sensor zum Erfassen von Betriebskennwerten. Die Betriebskennwerte können auch als Betriebsparameter, Betriebskenngrößen oder Betriebsgrößen bezeichnet werden.

Insbesondere enthält der Akkumulator 2 dabei einen Sensor zum Erfassen einer Ladestromstärke und Entladestromstärke 30, einen Sensor zum Erfassen einer Ladezeit 31, einen Sensor zum Erfassen eines Beschleunigungswerts und Bremswertes 32, einen Sensor zum Erfassen von Temperaturwerten 33, einen Sensor zum Erfassen von Innenwiderstandswerten 34, einen Sensor zum Erfassen der Kapazität 35 sowie ein Zählwerk 36 für die Anzahl an Beschleunigungswerten, welche einen vorbestimmten Schwellwert überschreiten.

Der Sensor zum Erfassen einer Ladezeit 31 kann auch als Uhr oder Real-Time Clock bezeichnet werden.

Der Beschleunigungswert kann als Wert für eine positive Beschleunigung und der Bremswert kann auch als Wert für eine negative Beschleunigung bezeichnet werden.

Der Sensor zum Erfassen von Temperaturwerten 33 kann auch als Thermometer oder Temperaturmesser bezeichnet werden.

Der Sensor zum Erfassen von Innenwiderstandswerten 34 kann auch als Ohmmeter bezeichnet werden.

Der Sensor zum Erfassen der Kapazität 35 kann auch als Sensor zum Erfassen der Amperestunden (Ah) bezeichnet werden.

Gemäß einer alternativen Ausführungsform des System bzw. des Akkumulators 2 ist möglich, dass weitere oder weniger Sensoren in dem Akkumulator 2 enthalten sind.

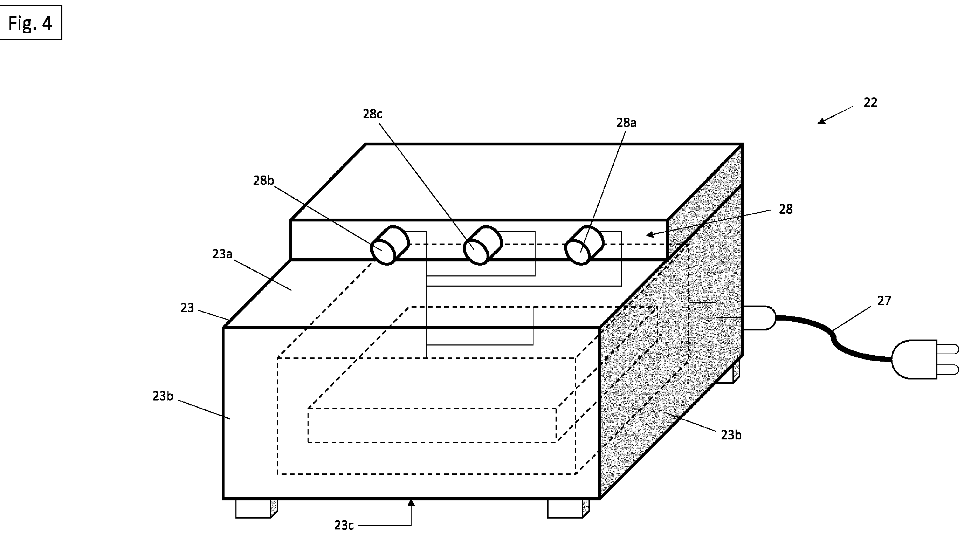

In Figur 4 ist die Ladevorrichtung 22 gezeigt, welche im Wesentlichen ein Ladergehäuse 23, eine Steuereinheit 24, einen Transceiver 25, eine Speichereinheit 26 und eine Energieversorgung 27 enthält. Das Ladergehäuse 23 enthält dabei im Wesentlichen ein Deckelelement 23a, vier Seitenwände 23b und ein Bodenelement 23c.

An dem Deckelelement 23a ist eine Laderschnittstelle 28 positioniert und dient zum elektrischen bzw. elektronischen sowie mechanischen Verbinden der Ladevorrichtung 22 mit dem Akkumulator 2. Zum elektrischen bzw. elektronischen Verbinden weist die Laderschnittstelle 28 einen Pluskontakt 28a, einen Minuskontakt 28b und einen Kommunikationskontakt 28c auf. Der Plus- und Minuskontakt 28a, 28b dient zur Erzeugen eines Stromkreises, wenn der Akkumulator 2 mit der Ladevorrichtung 22 verbunden ist. Der Kommunikationskontakt 28c dient zum Senden und Empfangen von Daten sowie Informationen in Form von elektrischen Signalen.

Alternativ oder zusätzlich kann die Ladevorrichtung 22 auch eine Funkkommunikation (z.B. Bluetooth) bzw. drahtlose Kommunikation enthalten.

Die Energieversorgung 27 der Ladevorrichtung 22 ist in Form eines Stromkabels zum Verbinden mit einer nicht gezeigten Netzstromquelle (d.h. Steckdose) ausgestaltet.

Im Inneren des Ladergehäuses 23 ist die Steuereinheit 24, der Transceiver 25 und die Speichereinheit 26 positioniert. Die Steuereinheit 24 steuert und regelt die einzelnen Funktionen der Ladevorrichtung 22. Zu diesen Funktionen gehören unter anderen die Einstellung eines Ladestroms (d.h. der Stromstärkewert), wenn ein Akkumulator 2 zum Laden mit der Ladevorrichtung 22 wiederlösbar verbunden ist. Der Transceiver 25 dient zum Senden und Empfangen von Daten sowie Informationen in Form von elektrischen Signalen.

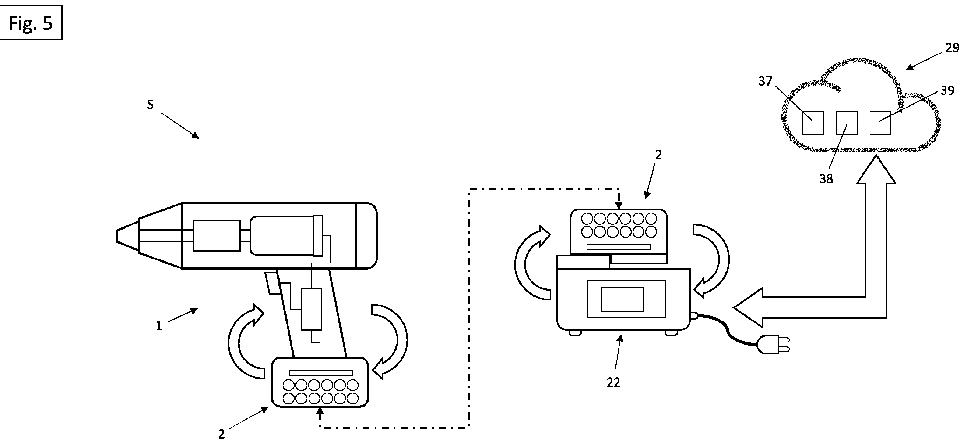

Wie in Figur 5 angedeutet, ist die Ladevorrichtung 22 insbesondere dazu ausgestaltet mit einer Datenspeicher- und Rechenvorrichtung 29 Daten sowie Informationen auszutauschen. Die Datenspeicher- und Rechenvorrichtung 29 enthält einen Transceiver 37, eine Recheneinheit 38 sowie eine Speichereinheit 39.

Die Datenspeicher- und Rechenvorrichtung 29 kann auch als Cloud bzw. Cloud-Rechner bezeichnet werden.

Zur Durchführung des Verfahrens ist der Akkumulator 2 zunächst mit der Werkzeugmaschine 1 verbunden, sodass elektrische Energie von den Energiespeicherzelle 16 zu den Verbrauchern der Werkzeugmaschine 1 gelangen kann, vgl. Figur 1. Die jeweiligen Schnittstellen des Akkumulators 2 sowie der Werkzeugmaschine 1 sind dabei wiederlösbar miteinander verbunden. Durch die Verbindung des Akkumulators 2 mit der Werkzeugmaschine 1 können auch Daten und Informationen in Form von elektrischen Signalen zwischen dem Akkumulator 2 und der Werkzeugmaschine 1 ausgetauscht werden. Zum Senden und Empfangen der elektrischen Signale dienen die jeweiligen Transceiver 19, 25 sowie die jeweils miteinander verbundenen Kommunikationskontakte 13c, 17c, des Akkumulators 2 und der Werkzeugmaschine 1.

Während der Verwendung des Akkumulators 2 als Energieversorgung der Werkzeugmaschine 1 erfassen die Sensoren des Akkumulators 2 die vorstehend erwähnten verschiedenen Betriebskennwerte. Es ist möglich, dass lediglich ein Teil der Sensoren Daten erfassen. Die von den Sensoren erfassten Betriebskennwerte werden in der Speichereinheit gespeichert.

Wie in Figur 5 angedeutet, kann der Akkumulator 2 von der Werkzeugmaschine 1 entnommen und mit der Ladevorrichtung 22 wiederlösbar verbunden werden. Die Energiespeicherzellen 16 des Akkumulators 2 können mit Hilfe der Ladevorrichtung 22 mit elektrischer Energie geladen werden.

Die jeweiligen Schnittstellen des Akkumulators 2 sowie der Ladevorrichtung 22 sind dabei wiederlösbar miteinander so kontaktiert, dass die jeweiligen Kommunikationskontakte 17c, 28c des Akkumulators 2 und der Ladevorrichtung 22 miteinander in Kontakt stehen. Durch die Verbindung des Akkumulators 2 mit der Ladevorrichtung 22 können auch Daten und Informationen in Form von elektrischen Signalen zwischen dem Akkumulator 2 und der Ladevorrichtung 22 ausgetauscht werden. Zum Senden und Empfangen der elektrischen Signale dienen die jeweiligen Transceiver 19, 25 des Akkumulators 2 und der Ladevorrichtung 22.

Vor Beginn des eigentlichen Ladevorgangs, d.h. bevor elektrische Energie von der Ladevorrichtung 22 zu den Energiespeicherzellen 16 des Akkumulators 2 gelangt, sendet der Akkumulator 2 die in der Speichereinheit 18 hinterlegten Betriebskennwerte mit Hilfe der Transceiver 19, 25 und Kommunikationskontakte 17c, 28c an die Ladevorrichtung 22.

Es ist dabei möglich, dass lediglich ein einziger Betriebskennwert an die Ladevorrichtung 22 gesendet wird, auch wenn mehr als ein Betriebskennwert von den Sensoren erfasst wurden.

Ebenfalls ist es auch möglich, dass der Akkumulator 2 wenigstens einen Regelparameter oder den gesamten Regelparametersatz, der aktuell in dem Akkumulator 2 gespeichert ist, an die Ladevorrichtung 22 sendet.

Die Ladevorrichtung 22 speichert die empfangenen Betriebskennwerte in der Speichereinheit 24 der Ladevorrichtung 22.

Wenn die Ladevorrichtung 22 mit der Datenspeicher- und Rechenvorrichtung 29 verbunden ist, werden die Betriebskennwerte an die Datenspeicher- und Rechenvorrichtung 29 gesendet.

In der Datenspeicher- und Rechenvorrichtung 29 sind Schwellwerte für die entsprechenden Betriebskennwert hinterlegt, die von den Sensoren des Akkumulators 2 erfasst werden.

Des Weiteren sind in der Datenspeicher- und Rechenvorrichtung 29 einzelne Regelparameter sowie vollständige Regelparametersätze für eine Vielzahl von unterschiedlichen Akkumulatoren 2 gespeichert.

Die erfassten Betriebskennwerte werden in der Datenspeicher- und Rechenvorrichtung 29 mit den jeweiligen Schwellwerten verglichen. Wenn ein Betriebskennwert einen entsprechenden Schwellwert übersteigt, wird ein neuer Regelparameter von der Datenspeicher- und Rechenvorrichtung 29 an die Ladevorrichtung 22 gesendet. Der neue Regelparameter wird anschließend von der Ladevorrichtung 22 zu dem verbundenen Akkumulator 2 gesendet. In der Steuerungseinrichtung 20 des Akkumulators 2 wird der empfangene neue Regelparameter verwendet, um einen korrespondierenden Regelparameter zu ersetzen. Dieser korrespondierende Regelparameter kann auch als bisheriger oder alter Regelparameter bezeichnet werden.

Gemäß eines alternativen Ausführungsbeispiels kann es auch möglich sein, dass mehr als ein einziger neuer Regelparameter von der Datenspeicher- und Rechenvorrichtung 29 an die Ladevorrichtung 22 gesendet wird, wenn mehr als ein Betriebskennwert die entsprechenden Schwellwerte übersteigt. Es ist zudem auch möglich, dass bereits ein oder mehrere neue Regelparameter von der Datenspeicher- und Rechenvorrichtung 29 an die Ladevorrichtung 22 gesendet werden, wenn ein oder mehrere erfasste Betriebskennwerte entsprechende Schwellwerte noch nicht übersteigen, sondern die erfassten Betriebskennwerte lediglich diesen Schwellwerten entsprechen.

Des Weiteren ist es auch möglich, dass anstelle eines oder mehrerer neuer Regelparameter zum Ersetzen der korrespondierenden Regelparameter ein vollständig neuer Regelparametersatz von der Datenspeicher- und Rechenvorrichtung 29 an die Ladevorrichtung 22 und schließlich an den Akkumulator 2 gesendet wird. Der vollständige neue Regelparametersatz dient zum Ersetzen des bestehenden Regelparametersatzes in dem Akkumulator 2.

Wenn die Ladevorrichtung 22 den neuen Regelparameter an den Akkumulator 2 gesendet hat und dieser neue Regelparameter den bisher bestehenden korrespondierenden Regelparameter ersetzt hat, wird der eigentliche Ladevorgang unter Berücksichtigung des neuen sowie der weiterhin bestehenden Regelparameter gestartet.

Wenn bei dem Abgleich bzw. Vergleich eines empfangenen Betriebskennwerts mit einem entsprechenden Schwellwert ergibt, dass der Schwellwert weder überschritten noch erreicht wurde, wird kein neuer Regelparameter von der Datenspeicher- und Rechenvorrichtung 29 zu der Ladevorrichtung 22 und schließlich zu dem Akkumulator 2 gesendet. Als Folge daraus wird der Ladevorgang unter Berücksichtigung des weiterhin bestehenden Regelparameter gestartet.

### Bezugszeichenliste:

- 1: Werkzeugmaschine
- 2: Akkumulator
- 3: Gehäuse
- 3a: vorderes Ende des Gehäuses
- 3b: unteres Ende des Gehäuses
- 4: Handgriff
- 5: Werkzeugaufnahme
- 6: Antrieb
- 7: Getriebevorrichtung
- 8: Abtriebswelle
- 9: Steuerungseinheit
- 10: Speichereinheit der Werkzeugmaschine
- 11: Transceiver der Werkzeugmaschine
- 12: Werkzeugmaschinenschnittstelle
- 13a: Pluskontakt der Werkzeugmaschinenschnittstelle
- 13b: Minuskontakt der Werkzeugmaschinenschnittstelle
- 13c: Kommunikationskontakt der Werkzeugmaschinenschnittstelle
- 14: Betätigungsschalter
- 15: Akku-Gehäuse
- 15a: Deckelelement
- 15b: Seitenwände
- 15c: Bodenelement
- 16: Energiespeicherzelle
- 17: Akku-Schnittstelle
- 17a: Pluskontakt der Akku-Schnittstelle
- 17b: Minuskontakt der Akku-Schnittstelle
- 17c: Kommunikationskontakt der Akku-Schnittstelle
- 18: Speichereinheit des Akkumulators
- 19: Transceiver des Akkumulators
- 20: Steuerungseinrichtung des Akkumulators
- 22: Ladevorrichtung
- 23: Ladergehäuse
- 23a: Deckelelement des Ladergehäuses
- 23b: Seitenwände des Ladergehäuses
- 23c: Bodenelement des Ladergehäuses
- 24: Steuereinheit der Ladevorrichtung
- 25: Transceiver der Ladevorrichtung
- 26: Speichereinheit der Ladevorrichtung
- 27: Energieversorgung der Ladevorrichtung
- 28: Laderschnittstelle
- 28a: Pluskontakt der Laderschnittstelle
- 28b: Minuskontakt der Laderschnittstelle
- 28c: Kommunikationskontakt der Laderschnittstelle
- 29: Datenspeicher- und Rechenvorrichtung
- 30: Sensor zum Erfassen einer Ladestromstärke und Entladestromstärke
- 31: Sensor zum Erfassen einer Ladezeit
- 32: Sensor zum Erfassen eines Beschleunigungswerts und Bremswertes
- 33: Sensor zum Erfassen von Temperaturwerten
- 34: Sensor zum Erfassen von Innenwiderstandswerten
- 35: Sensor zum Erfassen der Kapazität
- 36: Zählwerk
- 37: Transceiver der Datenspeicher- und Rechenvorrichtung
- 38: Recheneinheit der Datenspeicher- und Rechenvorrichtung
- 39: Speichereinheit der Datenspeicher- und Rechenvorrichtung
- S: System

## Patentansprüche

1. Verfahren zum Steuern und Regeln eines Systems (S) mit wenigstens einem Akkumulator (2) und einer Ladevorrichtung (22), wobei der wenigstens eine Akkumulator (2) einen Transceiver (19), wenigstens einen Sensor (30, 31, 32, 33, 34, 35) sowie eine Speichereinheit (18) und die Ladevorrichtung (22) einen Transceiver (25) sowie eine Speichereinheit (26) enthält, wobei in der Speichereinheit (10) des Akkumulators (2) wenigstens ein erste Regelparameter gespeichert ist,
**gekennzeichnet durch** die Verfahrensschritte
- Erfassen wenigstens eines Betriebskennwertes durch den wenigstens einen Sensor (30, 31, 32, 33, 34, 35) des Akkumulators (2);
- Verbinden des wenigstens einen Akkumulators (2) mit der Ladevorrichtung (22);
- Aussenden des wenigstens einen Betriebskennwertes des Akkumulators (2) von dem Akkumulator (2) an die Ladevorrichtung (22) vor Beginn eines Ladevorgangs;
- Senden des wenigstens einen Betriebskennwertes von der Ladevorrichtung (22) an eine Datenspeicher- und Rechenvorrichtung (29);
- Vergleichen des wenigstens einen Betriebskennwertes mit einem in der Datenspeicher- und Rechenvorrichtung (29) gespeicherten Schwellwert;
- Senden wenigstens eines zweiten Regelparameters von der Datenspeicher- und Rechenvorrichtung (29) über die Ladevorrichtung (22) zu dem wenigstens einen Akkumulator (2) zum Ersetzen des entsprechenden ersten Regelparameters, wenn der empfangene Betriebskennwert einen in der Datenspeicher- und Rechenvorrichtung (29) gespeicherten Schwellwert übersteigt;
- Laden des wenigstens einen Akkumulators (2) mit elektrischer Energie durch die Ladevorrichtung (22) mit wenigstens dem ersten Regelparameter; oder
- Laden des wenigstens einen Akkumulators (2) mit elektrischer Energie durch die Ladevorrichtung (22) mit wenigstens dem ersten Regelparameter.

2. Verfahren nach Anspruch 1
**gekennzeichnet durch** den Verfahrensschritt
- Aussenden wenigstens eines ersten Regelparameters des Akkumulators (2) von dem Akkumulator (2) an die Ladevorrichtung (22) vor Beginn eines Ladevorgangs.

3. Verfahren nach Anspruch 1 oder 2,
**gekennzeichnet durch** den Verfahrensschritt
- Verbinden des wenigstens ersten oder zweiten Akkumulators (2) mit einer Werkzeugmaschine (1);
- Versorgen der Werkzeugmaschine (1) mit elektrischer Energie durch ein Entladen des Akkumulators (2) mit wenigstens dem zweiten Regelparameter.

4. System (S) zur Durchführung des Verfahrens nach wenigstens einem der Ansprüche 1 bis 3 enthaltend wenigstens eine erste Systemkomponente, eine zweite Systemkomponente sowie eine dritte Systemkomponente, wobei die erste Systemkomponente in Form eines Akkumulators (2) mit einem ersten Transceiver (19) und einer ersten Speichereinheit (26), die zweite Systemkomponente in Form einer Datenspeicher- und Rechenvorrichtung (29) mit einem zweiten Transceiver (37) und die dritte Systemkomponente in Form einer Werkzeugmaschine (1) mit einem dritten Transceiver (11) und einer zweiten Speichereinheit (18) oder Ladevorrichtung (22) mit einem dritten Transceiver (25) und einer dritten Speichereinheit (26) ausgestaltet ist.
